# EUROPEAN PATENT APPLICATION

(11) **EP 1 587 108 A2**
(43) Date of publication of application: **19.10.2005**
(21) Application number: 05252351.1
(22) Date of filing: 15.04.2005
(51) Int. Cl.: G11B 27/00

(54) **Video recording/reproducing device**

(30) Priority: 15.04.2004 JP 2004120027
(71) Applicant: ORION ELECTRIC CO., Ltd., Takefu-City, Fukui 915-8555 (JP)
(72) Inventor: Doi, Tomofumi c/o Orion Electric Co., Ltd., Takefu City Fukui 915-8555 (JP)
(74) Representative: Paget, Hugh Charles Edward

(57) **Abstract**

Disclosed is a video recording/reproducing device which allow a user to perform a jump operation to a desired reproduction position simply and speedily.

A time information reading section (26) detects a total reproduction time of a video stored in a recording/reproducing medium. A time information division processing section (27) divides a total reproduction time into 10 parts. Numeric keys (ten keys) of a remote control device (30) for tuning a channel are sequentially assigned to 1 to 10 of the divided time areas. In this way, if the total reproduction time is, for example, 120 minutes, a jump is made at intervals of 12 minutes, and if "5" of the numeric keys is pressed, a time jump is simply made to a position corresponding to a lapse of 60 minutes.

## Description

### BACKGROUND OF THE INVENTION

### Field of the invention

The present invention relates to a video recording/reproducing device which records or reproduces in/from a recording/reproducing medium such as DVD and hard disk, or more particularly, to a recording/reproducing device which reproduces video by jumping to a divided time area specified by a user. The device may be capable of recording or reproducing, or recording and reproducing.

### Description of the related art

Conventionally, there are proposals on various methods as means for searching target parts, reproduction of which is desired by a user. For example, Japanese Patent Laid-Open Publication No. 9-147534 (Patent Document 1) proposes a reproducing device which performs control so as to access and move a reading position of audio information forward (FF (fast finding) direction) or backward (REW (rewinding) direction) by a predetermined time (e.g., 30 seconds) of reproduced audio according to an operation of step feeding operation means and resume a reproducing operation after the access movement is completed, while Japanese Patent Laid-Open Publication No. 2002-152635 (Patent Document 2) proposes a recording/reproducing device which allows the user to check a scene of preference while the user is viewing and listening using a bookmark function, select a bookmark when the user wants to view the scene so as to repeat slow reproduction of the recorded video from the bookmarked scene.

The reproducing device according to Patent Document 1 moves a reproduction position forward or backward by a predetermined period, for example, 30 seconds from the currently reproducing position, and therefore when the user reproduces a prestoredvideo and wants to make a jump to a position temporally separate from the reproduction start position, it is necessary to perform a complicated operation, operating the fast finding key or rewinding key many times or pressing the key continuously. On the other hand, the recording/reproducing device according to Patent Document 2 requires the user to affix a bookmark during reproduction to make a jump to an arbitrary position, which involves a complicated operation. Furthermore, DVDs which record movies available on the market generally include parts called "chapters" beforehand. A movie title of a DVD usually consists of several chapters and a chapter menu displays a button to make a direct jump to one of these chapters and reproduce it. Using this button allows the user to reproduce the specified chapter from the beginning, but even in the case of the device provided with such a chapter function, chapters are assigned to characteristic scenes and the like, but not assigned temporally equally, and therefore, for example, in the case of a DVD with a video title whose reproduction time is 120 minutes, when reproduction is started from the half position, that is, position approximately 60 minutes, it is inconvenient to execute fast finding or rewinding using the time as a reference. Furthermore, a model provided with a function of making a time jump by directly specifying a reproduction start time by operating a remote control device is also known in recent years. Such a time jump function allows a direct time jump to be made to a scene 30 minutes after the video start in a movie title of around 120 minutes, but specifying a reproduction start time requires the user to specify the time, for example, "0.3.0.0" by operating keys of the remote control device, which involves a complicated operation, causing a problem of degrading operability.

### SUMMARY OF THE INVENTION

The present invention has been implemented in view of the above described problems and it is an object of the present invention to provide a video recording reproducing device allowing quick time jumps through a simple operation.

The video recording reproducing device according to the first aspect of the invention is a video recording reproducing device which records or reproduces video audio information in from a recording reproducing medium, comprising time information reading means for reading a total reproduction time of video information stored in the recording reproducing medium, time division processing means for dividing the total reproduction time obtained by the time information reading means into ten equal divided time areas and a plurality of key input means assigned so as to correspond to the divided time areas 1 to 10, characterized in that information is reproduced from the divided time areas assigned to the keys by the input means.

The structure according to the first aspect of the invention allows the time information reading means to detect the total reproduction time of data stored in the recording/reproducing medium and allows the time area division processing means to divide the total reproduction time into 10 equal parts. When the user operates the numeric keys of the key input means, reproduction is started from the divided time area assigned to the numeric key according to the key operation requested by the user. For example, a recording/reproducing medium storing a 120-minute movie title is divided by the time area division processing means into 12-minute divided time areas and a jump is made to a divided time area through a key operation assigned to the divided time area and reproduction is started.

The video recording/reproducing device according to the second aspect of the invention is a video recording/reproducing device according to the first aspect of the invention, characterized in that the key input means include numeric keys numbered at least 1 to 10 and the numbers 1 to 10 of these numeric keys are associated with the divided time areas 1 to 10 sequentially.

Through the structure according to the second aspect of the invention, the time at the jump destination is calculated according to the number of the numeric key. The time at the jump destination is calculated by (total reproduction time/10) x "number of the numeric key." For example, when the total reproduction time is 120 minutes and if number "5" of the numeric keys is pressed, 12 x 5 = 60 and a time jump is made to a time point 60 minutes after the title is started.

The video recording/reproducing device according to the third aspect of the invention is the video recording/reproducing device according to the first or the second aspect of the invention, characterized in that the numeric keys have a function of starting reproduction from the divided time areas and a tuning function of selecting a channel.

Through the structure according to the third aspect of the invention, operating a numeric key except a reproducing time causes the channel corresponding to the numeric key to be selected and video reproduction is started from the divided time area corresponding to the numeric key during reproduction.

The video recording/reproducing device according to the fourth aspect of the invention is the video recording/reproducing device according to the third aspect of the invention, characterized in that the numeric keys are constructed so as to start reproduction from the divided time areas corresponding to the keys when pressed for a predetermined time.

Through the structure according to the fourth aspect of the invention, when a numeric key is pressed continuously for a predetermined time, reproduction is started from the divided time area corresponding to the key and the reproduction continues if the duration is less than the predetermined time.

The video recording/reproducing device according to the fifth aspect of the invention is the video recording/reproducing device according to the first aspect of the invention, further comprising a time bar display for each of the divided time areas and a display key for causing the current reproduction position to be on-screen displayed according to the time bar display.

Through the structure according to the fifth aspect of the invention, when the display key is operated during reproduction, the current reproduction position corresponding to the time bar display is on-screen displayed for each of the divided time areas on the display screen.

The video recording/reproducing device according to the first aspect of the invention is a video recording/reproducing device which records or reproduces video/audio information in/from a recording/reproducing medium, comprising time information reading means for reading a total reproduction time of video information stored in the recording/reproducing medium, time division processing means for dividing the total reproduction time obtained by the time information reading means into ten equal divided time areas and a plurality of key input means assigned so as to correspond to the divided time areas 1 to 10, characterized in that information is reproduced from the divided time areas assigned to the keys by the input means, and therefore operating the key input means during reproduction of the recording/reproduction medium allows a time jump to be made to a divided time area after the title is started through a one-touch operation. For example, to reproduce from the third divided time area, only the numeric key assigned to the divided time area needs to be operated. Furthermore, by dividing the total reproduction time into ten equal parts, the user can easily calculate every how many minutes a time jump of a video is made and when a time jump is made using the divided time as a reference, the user can easily grasp the position to which a jump is made, and therefore it is possible to easily reproduce video from a desired reproduction time, which provides excellent usability.

The video recording/reproducing device according to the second aspect of the invention is the video recording/reproducing device according to the first aspect of the invention, characterized in that the key input means include numeric keys numbered at least 1 to 10 and the numbers 1 to 10 of these numeric keys are associated with the divided time areas 1 to 10 sequentially, and therefore operating the numeric key No. 5 causes the fifth divided time area to start reproduction and makes it possible to make a time jump to a desired divided time area simply and quickly.

The video recording/reproducing device according to the third aspect of the invention is the video recording/reproducing device according to the first or the second aspect of the invention, characterized in that the numeric keys have a function of starting reproduction from the divided time areas and a tuning function of selecting a channel, which makes it possible to make the key input means such as a remote control device more compact, eliminates the necessity to increase the number of keys uselessly, which is rational and can also reduce the manufacturing cost of the key input means.

The video recording/reproducing device according to the fourth aspect of the invention is the video recording/reproducing device according to the third aspect of the invention, characterized in that the numeric keys are constructed so as to start reproduction from the divided time areas corresponding to the keys when pressed for a predetermined time, and therefore no jump is made to the divided time area unless the key is pressed continuously for the predetermined time, which can prevent operation errors.

The video recording/reproducing device according to the fifth aspect of the invention is the video recording/reproducing device according to the first aspect of the invention, further comprising a time bar display for each of the divided time areas and a display key for causing the current reproduction position to be on-screen displayed according to the time bar display, and therefore it is possible to easily decide the lapse of the divided time area with respect to the reproduction time and when a jump is made to a scene several minutes after or before the current reproducing scene, it is possible to easily decide the scene from the time bar display.

### BRIEF DESCRIPTION OF THE DRAWINGS

FIG. 1 is a block diagram of a video recording/reproducing device showing an embodiment of the present invention;
FIG. 2 is a block diagram of the inside of the main microcomputer according to the embodiment of the present invention;
FIG. 3 is a diagram illustrating a state in which a total reproduction time is divided according to the embodiment of the present invention;
FIG. 4 is a diagram illustrating a time division jump setting screen according to the embodiment of the present invention;
FIG. 5 is a reference chart showing a reproduction position with respect to a time bar display which is divided into 10 parts according to the embodiment of the present invention;
FIG. 6 is a front view of the remote control device according to the embodiment of the present invention; and
FIG. 7 is a flow chart showing a time jump procedure according to the embodiment of the present invention.

### DETAILED DESCRIPTION OF THE PREFERRED EMBODIMENTS

With reference now to the attached drawings, one preferred embodiment for implementing the present invention will be explained below.

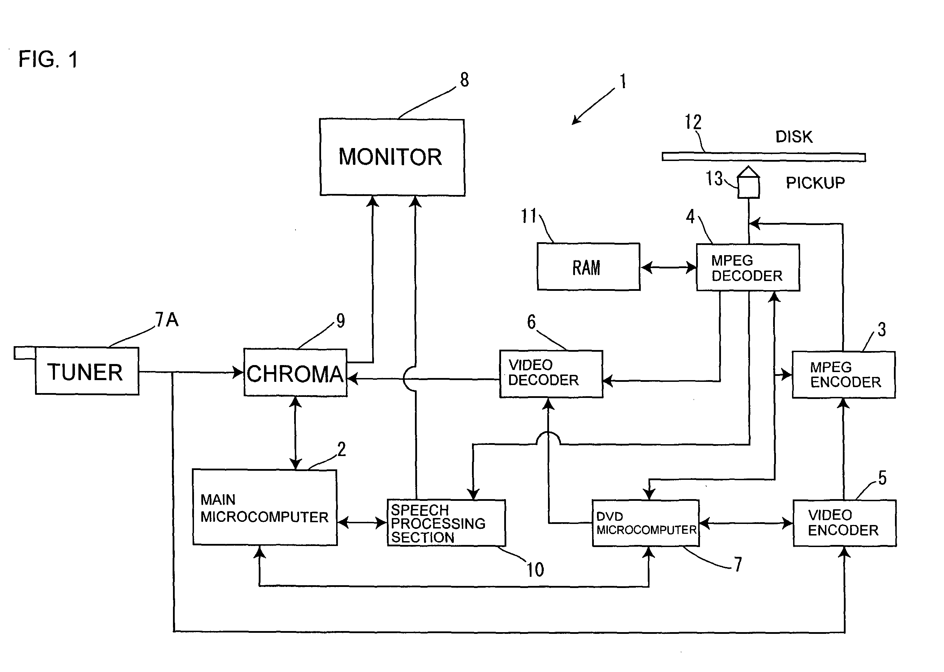

FIG. 1 is a block diagram of a video recording/reproducing device 1 which is an embodiment of the present invention and the video recording/reproducing device 1 is provided with a main microcomputer 2 for controlling the operation of the entire device and a DVD microcomputer 7 for controlling an MPEG encoder 3, an MPEG decoder 4 and a video encoder 5, and a video decoder 6. Furthermore, the video recording/reproducing device 1 is provided with a tuner 7A which selects a broadcast signal of a desired channel from a plurality of broadcast signals received by a reception antenna and obtains a video signal corresponding to the broadcast signal, a monitor 8 made up of a CRT (Cathode-Ray Tube) displaywhich displays video signals output from this tuner 7A or video from video signals output from the MPEG decoder 6 or a flat panel display such as an LCD (Liquid Crystal Display), a chroma 9 which carries out video processing to project a video on this monitor 8 and a audio processing section 10. Furthermore, the MPEG decoder 4 is connected to a RAM (Random Access Memory) 11 which stores data generated under the control of the DVD microcomputer 7 or is used as a working area and a pickup 13 for reading data stored in a disk 12 or storing data therein as a recording/reproducing medium.

During recording, the video encoder 5 carries out A/D conversion processing on a video signal output from the tuner 7A, records digital data and obtains video data, the MPEG encoder 3 compresses the digital signal of this recorded video data and generates a recording MPEG stream. During reproduction, the MPEG decoder 4 carries out data expansion processing on the MPEG stream stored in the disk, generates reproduced video data, outputs the reproduced video data to the video encoder 6 and carries out D/A conversion processing to obtain an analog video signal.

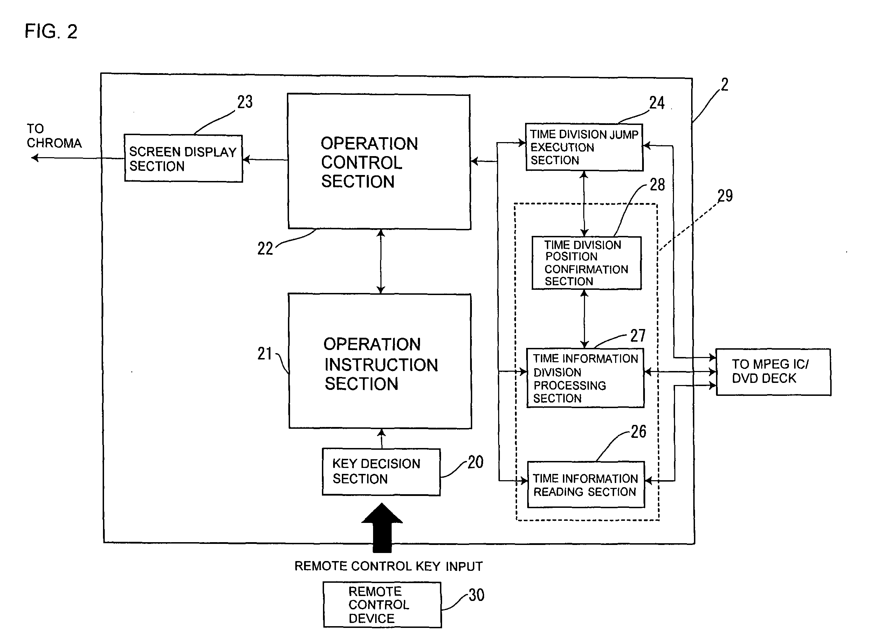

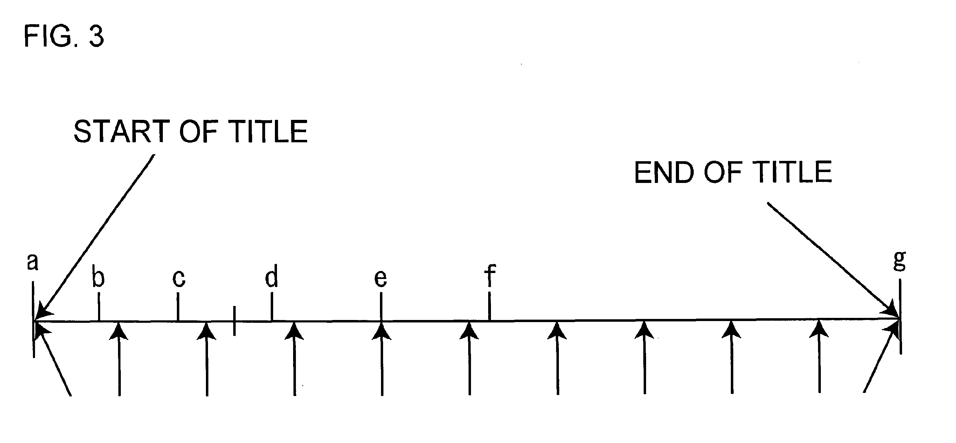

Next, the control of the main microcomputer 2 will be explained with reference to the block diagram in FIG. 2. The video recording/reproducing device 1 is operated through key inputs of a remote control device 30 which will be described later, its input signal is decided by a key decision section 20 and output to an operation instruction section 21, further the signal from the operation instruction section 21 is output to the operation control section 22, controlled according to the operation requested by the user, and the signal is output from the screen display section 23 to the chroma 9. Furthermore, a RAM 29 of the main microcomputer 2 stores data of a time information reading section 26, a time area division processing section 27 and a time division position confirmation section 28, the time information reading section 26 reads a total reproduction time of the data stored in the disk 12 and the time area division processing section 27 divides the total reproduction time into 1 to 10 divided time areas as shown in FIG. 3. The time division position confirmation section 28 decides which video of the 10 divided time areas is being reproduced. In FIG. 3, reference characters a to g denote chapter marks affixed to the disk 12.

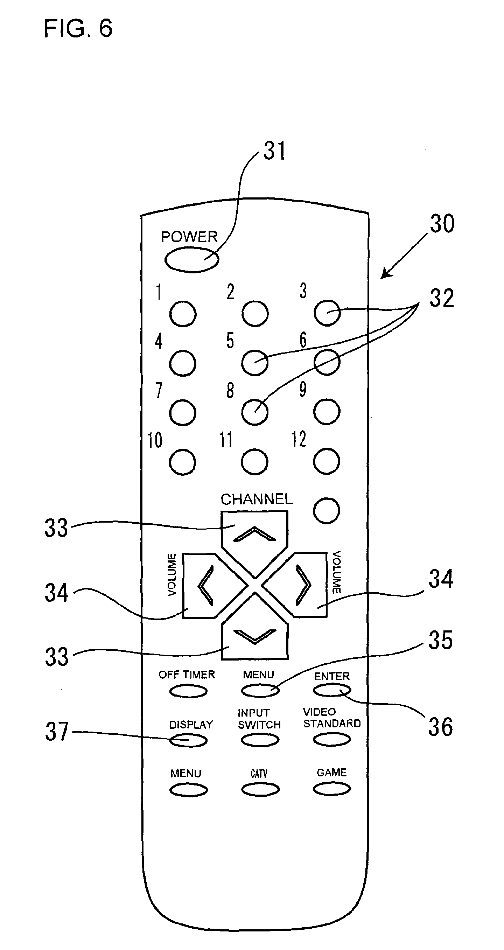

As shown in FIG. 6, the remote control device 30 is used to operate a television receiver or the video recording/reproducing device 1 and is provided with a power key 31 for turning on power, numeric keys 32 of 1 to 12 to select a channel, up/down keys 33 consisting of a pair of up and down keys and right and left cursor keys 34 to select a channel and select a predetermined adjustment or setting from the menu displayed, a menu key 35 to display a menu screen, an enter key 36, a display key 37 to on-screen display a time bar corresponding to the divided time area during reproduction, and the like. Furthermore, the numeric keys 32 of 1 to 10 are assigned in association with the 1 to 10 divided time areas which have been divided into 10 parts by the time area division processing section 27.

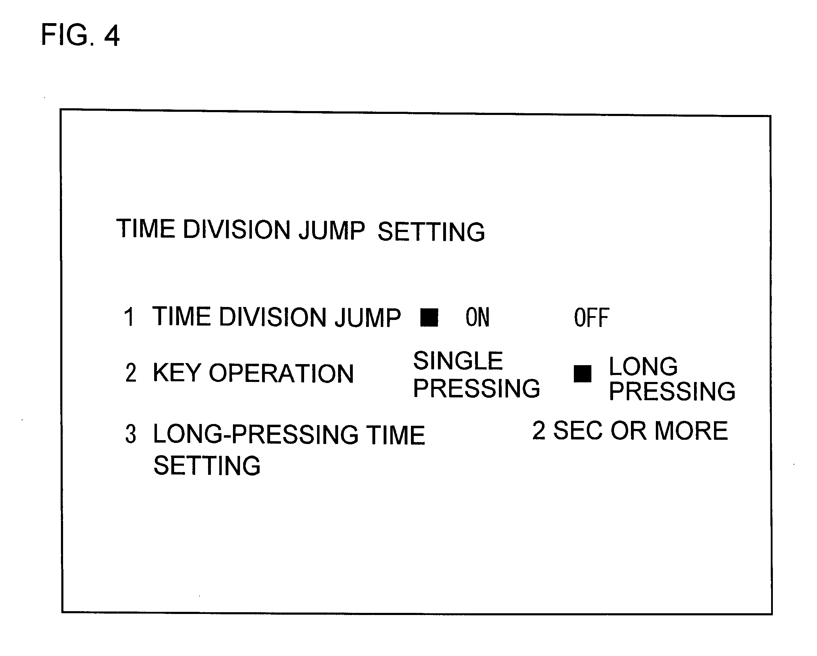

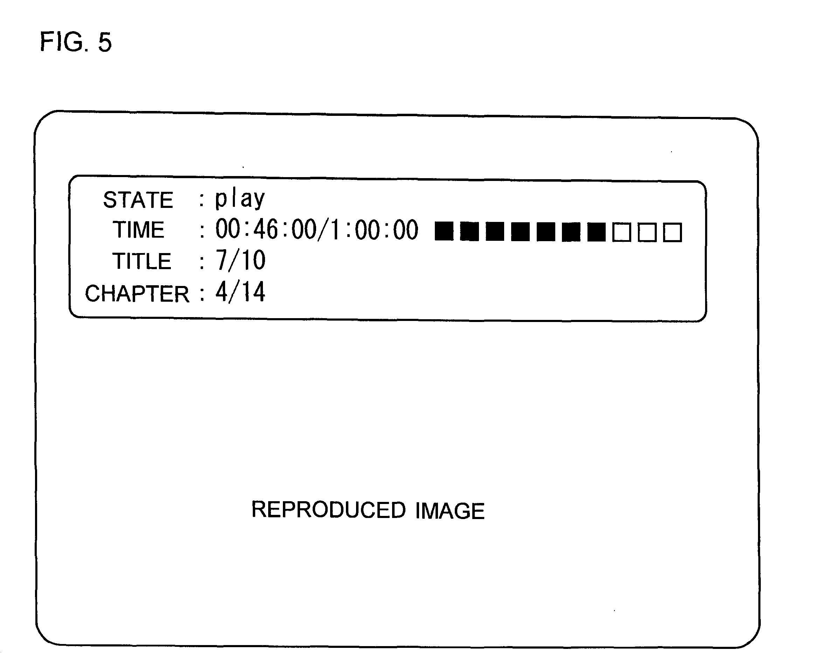

Next, the setting of a time division jump according to this embodiment will be explained. FIG. 4 shows an example of a menu screen which is displayed when the menu key 35 is operated and when the menu key 35 is operated, the monitor 8 displays selection items like "time division jump" "key operation" and "long-pressing time setting" as time division jump settings. Here, the user operates the up/down keys 33 up and down and the right and left cursor keys 34, selects ON/OFF of "time division jump", selects "key operation" to decide single pressing or long-pressing when a time division jump is made and decides the length in seconds of the "long-pressing time setting." When "single pressing" is selected as "key operation" , a jump is made to the video of the divided time area corresponding to the numeric key 32 the moment the numeric key 32 of reproduction in progress is operated and when "long-pressing" is selected, a jump is made to the video of the divided time area corresponding to the numeric key 32 by pressing the numeric key 32 continuously for the time determined by "long-pressing time setting." The initial value of the long-pressing time is set to 2 seconds and carrying out the "long-pressing time setting" makes it possible to set an arbitrary number of seconds. Furthermore, operating the display key 37 causes the current reproduction position to be on-screen displayed on the time bar display which is divided into 10 parts as shown in FIG. 5.

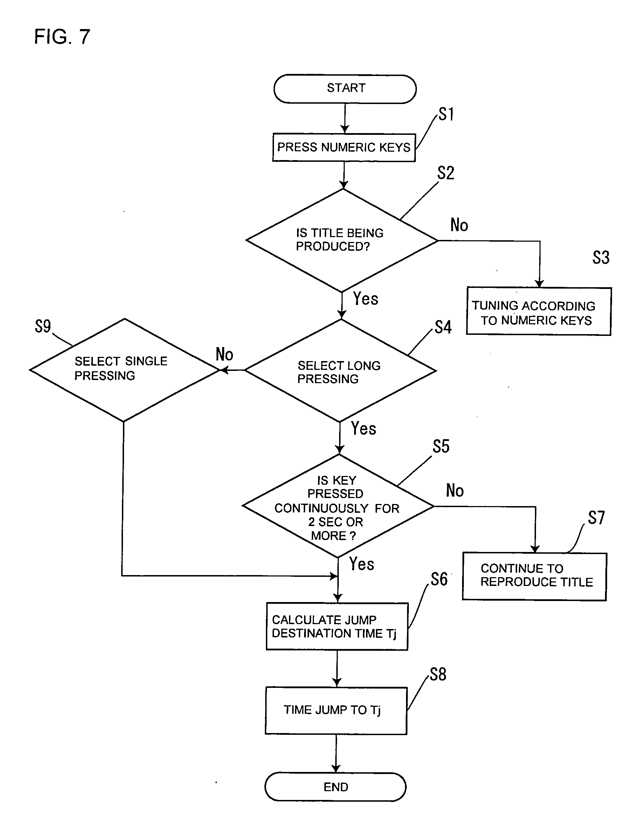

Next, with reference to the flow chart in FIG. 7, a time jump through time division according to this embodiment will be explained. When the user selects "ON" as the "time division jump" item on the menu screen, if the disk 12 is set in the video recording/reproducing device 1, the time information reading section 26 detects the total reproduction time of the data stored in the disk 12 and the time area division processing section 27 divides the total reproduction time into 10 equal parts. That is, in the case of the disk 12 storing a 120-minute movie title, the time area division processing section 27 divides the movie title into 12-minute divided time areas. When the user operates the numeric keys 32 of the remote control device 30 (step S1), the key decision section 20 decides the key operation and starts operation according to the key operation requested by the user. At this time, it is decided whether the disk 12 is being reproduced or not (step S2), and if the disk 12 is not being reproduced, tuning according to the channel corresponding to the numeric keys 32 is performed (step S3). If the disk 12 is being reproduced, it is decided whether the user has selected "single pressing" or set "long-pressing" in the selection item of "key operation" that the user has set on the menu screen and if the user has selected "long-pressing" (step S4), the operation time of the numeric keys 32 is measured and when the user presses the numeric keys 32 continuously for the number of seconds set in the "long-pressing time setting" item, for example, initial value of 2 seconds (step S5), a jump destination time Tj corresponding to the value of the numeric keys 32 is calculated (step S6). When the operation of the numeric keys 32 is 2 seconds or less, reproduction of the title is continued (step S7). Assuming that the total reproduction time of the title is Ta, the jump destination time Tj can be calculated as (Ta/10) x "value of numeric keys 32." For example, when the total reproduction time Ta is 120 minutes and "5" of the numeric keys 32 is pressed, 12 x 5 = 60, and a time jump is made to the destination 60 minutes after the title is started (step S8). If the user has selected "single-pressing", the process moves to steps S6, S8 simultaneously with the operation of the numeric keys 32 and a time jump is made.

As shown above, this embodiment divides the total reproduction time of the video stored in the disk 12 into 10 parts and assigns numbers 1 to 10 of the numeric keys 32 of the remote control device 30 to the divided time areas 1 to 10, and in this way when the numeric keys 32 of the remote control device 30 are operated sequentially, for example, 1, 2, 3 during reproduction of the disk 12, it is possible to make a time jump to time points every 12 minutes from the start of the title. For example, it is possible to easily make a time jump to a position after 36 minutes by operating "3" of the numeric keys 32 and a position after 60 minutes by operating "5" of the numeric keys 32. Thus, by simply operating the numeric keys 32, it is possible to reproduce a video from a desired approximate reproduction time. Furthermore, by dividing the total reproduction time into 10parts, the user can also easily calculate every howmanyminutes a time jump is made and when a time jump is made using the divided time as a reference, operating "3" of the numeric keys 32 allows a time jump to a position approximately 1/3 of the total reproduction time and operating "6" of the numeric keys 32 allows a time jump to a position approximately 2/3 of the total reproduction time, and therefore it is easily understandable to which position a jump is made. Thus, after making a jump to an approximate position by operating the numeric keys 32, using a fast find or rewind key together allows the user to access a desired scene simply and speedily and allows the user to easily reproduce from a desired reproduction time, thus providing excellent usability. Furthermore, since it is possible to display the current reproduction position on the time bar display which is divided into 10 parts by operating the display key 37, it is possible to easily decide the elapsed time during a reproduction time and when a jump is made to a scene several minutes after or before the current reproduction scene, it is possible to easily decide the scene on the time bar display. Furthermore, 1 to 10 of the numeric keys 32 can also be used as the numeric keys 32 for tuning a channel, and therefore it is possible to make the remote control device 30 more compact and there is no need to increase the number of keys uselessly, which is rational and also contributes to a reduction in the manufacturing cost of the remote control device 30.

One preferred embodiment of the present invention has been described in detail so far, but the present invention is not limited to the foregoing embodiment and can be implemented modified in various ways within the scopes of the present invention. For example, key arrangement and key functions of the remote control device can be selected as appropriate. The foregoing embodiment has shown an example where the numeric keys 1 to 12 for tuning a channel are also used as time jump keys, but it is also possible to provide a separate numeric keypad dedicated to time jumps. Furthermore, when a jump is made from some midpoint of reproduction to a reproduction start position, that is, position "0" in FIG. 3, the remote control device may also be provided with a key for locating the start of a recorded sequence.

## Claims

1. A video recording/reproducing device which records or reproduces video/audio information in/from a recording/reproducing medium, comprising
time information reading means for reading a total reproduction time of video information stored in the recording/reproducing medium,
time division processing means for dividing the total reproduction time obtained by the time information reading means into ten equal divided time areas, and
a plurality of key input means assigned so as to correspond to the divided time areas 1 to 10,
**characterized in that** information is reproduced from the divided time areas assigned to the keys by the key input means.

2. The video recording/reproducing device according to claim 1, **characterized in that** the key input means include numeric keys numbered at least 1 to 10 and the numbers 1 to 10 of the numeric keys are associated with the divided time areas 1 to 10 sequentially.

3. The video recording/reproducing device according to claim 1 or 2, **characterized in that** the numeric keys have a function of starting reproduction from the divided time areas and a tuning function of selecting a channel.

4. The video recording/reproducing device according to claim 3, **characterized in that** the numeric keys are constructed so as to start reproduction from the divided time areas corresponding to the key when pressed for a predetermined time.

5. The video recording/reproducing device according to claim 1, further comprising:
a time bar display for each of the divided time areas, and
a display key for causing the current reproduction position to be on-screen displayed according to the time bar display.
